# EUROPEAN PATENT APPLICATION

(11) **EP 2 164 248 A2**
(43) Date of publication of application: **17.03.2010**
(21) Application number: 09156943.4
(22) Date of filing: 31.03.2009
(51) Int. Cl.: H04N 5/44

(54) **Display Apparatus, Remote Controller, Display System and Control Method Thereof**

(30) Priority: 12.09.2008 KR 20080090155
(71) Applicant: SAMSUNG ELECTRONICS CO., LTD., Suwon-City, Kyungki-do (KR)
(72) Inventor: KWAK, Han-tak, Gyeonggi-do (KR)
(74) Representative: Walaski, Jan Filip

(57) **Abstract**

Disclosed are a display apparatus, remote controller, a display system and a control method thereof. The display system includes a display apparatus and a remote controller for controlling the display apparatus. The display apparatus includes: a first communicating unit that communicates with the remote controller; and an image control unit that generates control item information for controlling a predetermined control item, transmits the generated control item information to the remote controller, and controls the control item according to a control signal received from the remote controller. The remote controller includes: a second communicating unit that receives the control item information from the display apparatus; a user selection unit for selection by a user; and a remote control unit that allocates a control function for controlling the control item to the user selection unit and outputs the control signal corresponding to the control function selected by the user to the display apparatus.

## Description

The present invention relates to a display apparatus, a remote controller, a display system and a control method thereof.

Various kinds of electronic devices including display apparatuses can be remotely controlled by a remote controller. With development and increase of functions of electronic devices, control items of the remote controller are increased as well.
In particular, in a case of a television which receives broadcasting signals, a variety of mode for control of the television is generated due to increase of the number of digital broadcasting channels, various external devices connectable to the television and so on. Accordingly, the number of buttons to be included in the remote controller increases as well and their structure becomes complicated.

Although there is a merit in that interfaces for a user are increased with increase of control using the remote controller, there arises a problem in that complication of the structure of the remote controller may lead to troublesomeness and difficulty in use of the remote controller by the user.

Accordingly, it is an aspect of the present invention to provide a remote controller which can be operated by a user with convenience and ease, a display system employing the remote controller, and a control method thereof.

Another aspect of the present invention is to provide a display apparatus and a remote controller which can exchange a variety of control signals therebetween using bidirectional communication, a display system including the display apparatus and the remote controller, and a control method thereof.

Still another aspect of the present invention is to provide a remote controller which has the reduced number of buttons and can transmit a variety of control signals, a display system employing the remote controller, and a control method thereof.

Additional aspects of the present invention will be set forth in part in the description which follows and, in part, will be obvious from the description, or may be learned by practice of the present invention.

The foregoing and/or other aspects of the present invention can be achieved by providing a remote controller for controlling an external display apparatus, including: a communicating unit that receives control item information for controlling predetermined control items of the display apparatus from the display apparatus; a user selection unit for selection by a user; and a controller that allocates a control function for controlling the control item to the user selection unit based on the control item information and outputs a control signal corresponding to the control function selected by the user to the display apparatus.

According to an aspect of the invention, the communicating unit conducts RF communication with the display apparatus.

According to an aspect of the invention, the control item information includes a key code for controlling the control item and the control signal is generated based on the key code.

According to an aspect of the invention, the user selection unit includes a touch panel, and the controller displays an image indicating the control function on the touch panel.

According to an aspect of the invention, the user selection unit includes a plurality of buttons, and the remote controller further includes a display unit displaying the control function corresponding to the plurality of buttons.

According to an aspect of the invention, the user selection unit includes a plurality of buttons, and the plurality of buttons includes light-emitting elements that emit light if the control function is allocated to each of the buttons.

According to an aspect of the invention, upon receiving control item information corresponding to a predetermined general mode from the display apparatus, the controller allocates a control function to increase/decrease a channel for receipt of a broadcasting signal and sound of the broadcasting signal to the user selection unit so that the user can control the channel and the sound with ease.

The foregoing and/or other aspects of the present invention can be achieved by providing a display apparatus that can be controlled by an external remote controller, including: a communicating unit that communicates with the remote controller; and a controller that generates control item information on a control function for controlling a predetermined control item, transmits the generated control item information to the remote controller, and controls the control item according to a control signal corresponding to the control function received from the remote controller.

The foregoing and/or other aspects of the present invention can be achieved by providing a display system including a display apparatus and a remote controller for controlling the display apparatus, wherein the display apparatus includes: a first communicating unit that communicates with the remote controller; and an image control unit that generates control item information for controlling a predetermined control item, transmits the generated control item information to the remote controller, and controls the control item according to a control signal received from the remote controller, and the remote controller includes: a second communicating unit that receives the control item information from the display apparatus; a user selection unit for selection by a user; and a remote control unit that allocates a control function for controlling the control item to the user selection unit and outputs the control signal corresponding to the control function selected by the user to the display apparatus.

The above and/or other aspects of the present invention will become apparent and more readily appreciated from the following description of the exemplary embodiments, taken in conjunction with the accompanying drawings, in which:
FIG. 1 is a control block diagram of a display system according to a first embodiment of the present invention;
FIG. 2 is a control flow chart for explaining a control method of the display system of FIG. 1;
FIG. 3 is a control block diagram of a display system according to a second embodiment of the present invention;
FIGs. 4A and 4B are schematic views illustrating a remote controller of FIG. 3 showing a variety of control item information;
FIG. 5 is a schematic view illustrating a remote controller according to a third embodiment of the present invention; and
FIG. 6 is a schematic view illustrating a remote controller according to a fourth embodiment of the present invention.

Reference will now be made in detail to the embodiments of the present invention, examples of which are illustrated in the accompanying drawings, so that those in the art can easily practice the present invention. The present invention is not limited to exemplary embodiment disclosed herein but may be implemented in different forms.

In the following embodiments, for the purpose of clarity, the same or similar components are denoted by the same reference numerals throughout the drawings, and explanation thereof will be representatively given in a first embodiment but will be omitted in other embodiments.

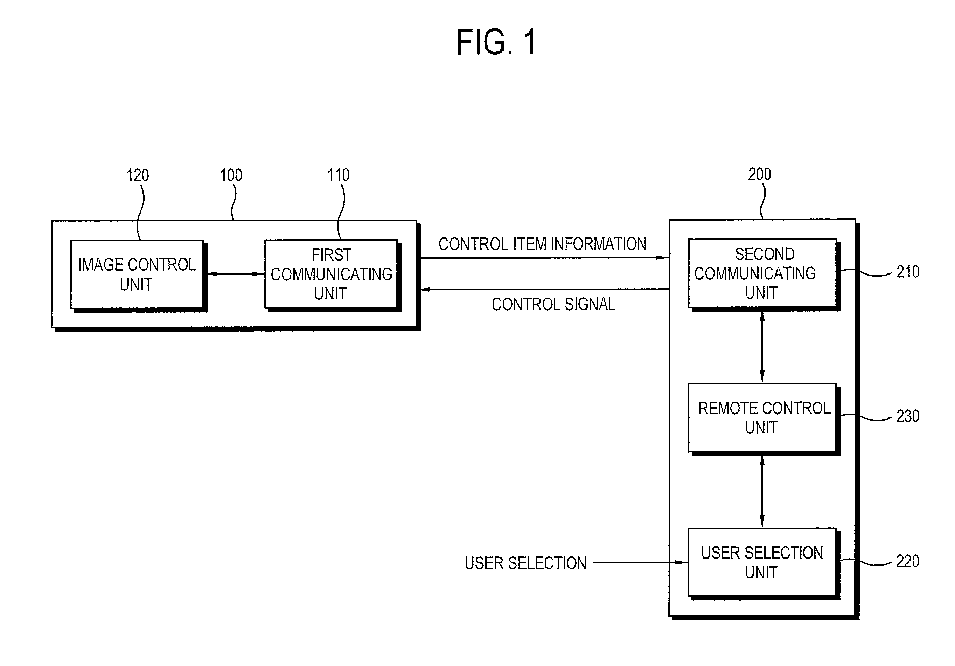

FIG. 1 is a control block diagram of a display system according to a first embodiment of the present invention. As shown in FIG. 1, a display system includes a display apparatus 100 and a remote controller 200 which controls the display apparatus 100. The display apparatus 100 corresponds to an electronic device which is capable of processing a video signal received from an image source. The display apparatus 100 includes a first communicating unit 110 which communicates with the remote controller 200, and an image control unit 120 which transmits control item information via the first communicating unit 110, and the remote controller 200 includes a second communicating unit 210 which communicates with the first communicating unit 110, a user selection unit 220 for a selection by a user, and a remote control unit 230 for control of both components 110 and 220.

The first communicating unit 110 and the second communicating unit 210 conduct bidirectional radio frequency (RF) wireless communication and not unidirectional infrared communication. Since RF communication provides a wide communication frequency band, the display apparatus 100 may exchange a variety of signals with the remote controller 200. In other words, control signals transmitted from the remote controller 200 to the display apparatus are not specified or fixed. The display apparatus 100 may transmit a variety of control information to the remote controller 200 and change or newly set key codes of the remote controller 200.

The image control unit 120 generates control item information to regulate control items and transmits the generated control item information to the remote controller 200 via the first communicating unit 110. The term 'control items' refer to various control objects regarding the display apparatus 100, which may be controlled by a user. For example, the user may adjust a picture ratio of the display apparatus 100, adjust its sound, or change a broadcasting channel. In an exemplary embodiment, the 'control items' may be any operations or functions of the display apparatus 100. In addition, external devices connected to the display apparatus 100 may be controlled through the display apparatus 100. In this manner, all things regarding display environments or display modes which may be adjusted/changed by a user using the remote controller 200 corresponds to the control items. Between an existing display apparatus and a remote controller, control items could be controlled only through key codes of prescribed standards. Since the display apparatus is merely an object to be controlled, restrictions were imposed on communication between the display apparatus and the remote controller. However, according to this embodiment, since real time communication between the remote controller 200 and the display apparatus 100 becomes possible, a variety of control item information according to current display environments can be transmitted from the display apparatus 100 to the remote controller 200.

The control item information may include information on which control item is controlled, information on a control function meaning a method of controlling control items, key codes corresponding to the control function, and the like. In addition, the control item information may include mapping information for individually mapping the key code corresponding to the control function to the user selection unit 220. For example, if a control item is a color temperature of an image, the control function may refer to increasing or decreasing a color temperature for red color, increasing or decreasing a color temperature for green color, and increasing or decreasing a color temperature for blue color. When a control signal is input from the remote controller 200 to the image control unit 120, the image control unit 120 transmits a key code related to a corresponding control function to the remote controller 200 so that the remote controller 200 can recognize which color is increased or decreased in its color temperature. The control item information includes all information that the display apparatus 100 may transmit to the remote controller 200 in connection with control items.

The user selection unit 220 corresponds to a direct interface including a plurality of buttons and the like, through which a user controls the display apparatus 100 using the remote controller 200.

The remote control unit 230 allocates a control function to the user selection unit 220 based on the control item information. The control function is allocated to the user selection unit 220 in such a manner that one part of the user selection unit 220 increases the color temperature of red color, another part of the user selection unit 220 decreases the color temperature of red color, etc. Mapping information for allocating the control function to the user selection unit 220 may be received from the display apparatus 100, or the remote control unit 230 may have mapping information on key codes. When a user selects a particular part of the user selection unit 220, the remote control unit 230 transmits a control signal for performing the control function allocated to the user selection unit 220 to the display apparatus 100. The control signal is generated based on a key code transmitted from the display apparatus 100, and the image control unit 120 receives the control signal and controls a corresponding control item according to the control signal. In this embodiment, the key code may refer to a control signal itself output from the remote controller 200 or a different identification value used for the remote control unit 230 to generate the control signal.

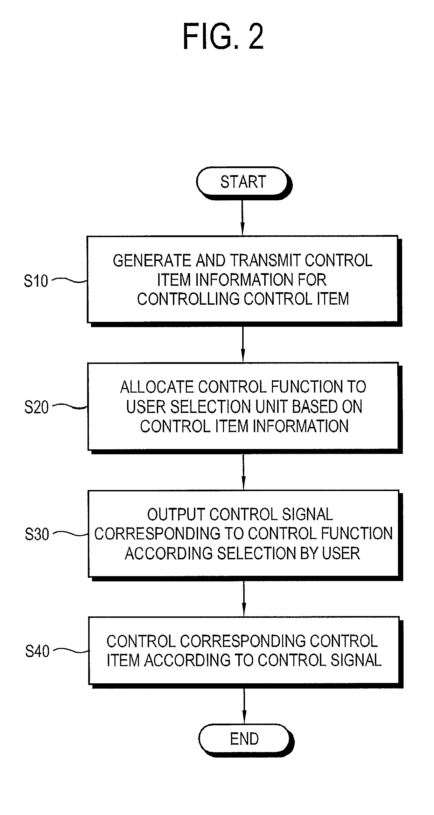

FIG. 2 is a control flow chart for explaining a control method of the display system according to this embodiment. A method of signal communication between the display apparatus 100 and the remote controller 200 will be described below with reference to FIG. 2.

First, the image control unit 120 generates control item information for controlling a control item and transmits the generated control item information to the remote controller 220 (S10). The control item information may include a key code for controlling the control item.

Upon receiving the control item information, the remote controller 230 allocates a control function for controlling the control item to the user selection unit 220 (S20). Namely, when a user selects the user selection unit 220, a user interface is formed for each control function so as to perform the control function.

When the user selects the user selection unit 220, the remote control unit 230 generates a control signal corresponding to the selected control function and outputs the generated control signal to the display apparatus 100 via the second communicating unit 210 (S30). The control signal may be generated based on the key code.

The image control unit 120 controls a corresponding control item according to a control signal received via the first communicating unit 110 (S40).

According to this embodiment, every time the remote control unit 230 receives the control item information, the remote control unit 230 allocates the corresponding control function to the user selection unit 220, and a plurality of control functions can be implemented by the same part of the user selection unit 220. In addition, since a particular part of the user selection unit 220 is not limited to a particular function, the remote controller 200 according to this embodiment may be used as a controller of electronic devices other than the display apparatus 100. In this case, the electronic devices may generate control item information to be transmitted to the remote controller 200. On the one hand, if an electronic device is connected to the display apparatus 100 and is controlled the display apparatus 100, control item information to be transmitted to the remote controller 200 may be generated in the electronic device or the display apparatus 100.

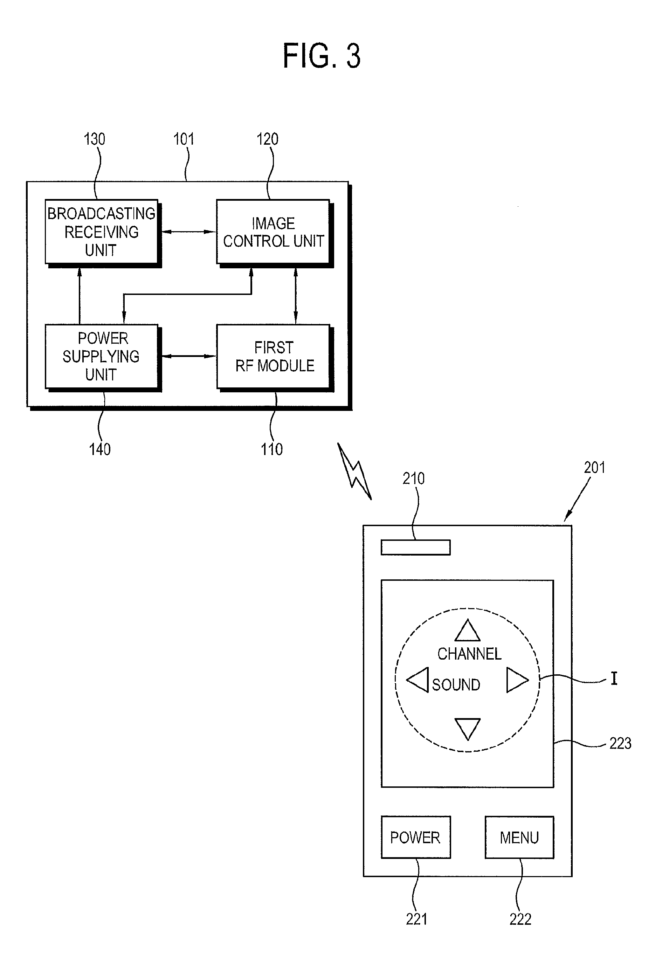

FIG. 3 is a control block diagram of a display system according to a second embodiment of the present invention.

As shown in FIG. 3, a display apparatus further includes a broadcasting receiving unit 130 for receiving broadcasting signals and a power supplying unit 140 for switching ON/OFF power to be supplied to the broadcasting receiving unit 130. A remote controller 201 includes a power key 221 for switching ON/OFF of a display apparatus 101, as a user selection unit, a menu key 222 for selection of various control items, and a touch panel 223 for display of control item information. The display apparatus 101 is implemented as a television which receives broadcasting signals.

A first RF module 110 corresponds to the first communicating unit of FIG. 1, and the remote controller 201 includes a second RF module 210 which communicates with the first RF module 110.

The broadcasting receiving unit 130 may include an antenna for receiving broadcasting signals, a cable, and a tuner for tuning the broadcasting signals.
When the power key 221 of the remote controller 201 or a power key (not shown) provided in the display apparatus 101 is selected, the power supplying unit 140 supplies power to circuits of the display apparatus 101 including the broadcasting receiving unit 130.

The display apparatus 101 provides a variety of display modes which may be adjusted by a user. For example, the display apparatus 101 supports a variety of modes including a basic mode such as channel change and sound conditioning, an external input mode for controlling external inputs, an image control mode for adjusting color temperature, a contrast ratio, a gamma value and a picture ratio, a language mode for adjusting an OSD language or a caption language, and the like. The menu key 222 corresponds to a user interface for selecting a display mode that a user wishes to adjust.

When the power key 221 of the remote controller 201 is selected and a broadcasting signal is received in the display apparatus 101, the image control unit 120 transmits control item information corresponding to a general mode to the remote controller 201. The general mode refers to a display mode which is set to a default and may control increase/decrease of a channel for broadcasting signal receipt and increase/decrease of sound of the broadcasting signal. The image control unit 120 generates control items and an image (I) corresponding to the control item, as control item information.

The remote controller 201 receives the image (I) and displays the received image (I) on the touch panel 223. The remote controller 201 according to this embodiment includes the touch panel 223 as an input unit for user selection. The touch panel 223 includes four triangles arrayed to increase or decrease a channel and sound. A user may receive an interface to allow the simplest control to be performed after turning on the display apparatus 101. The remote controller 230 divides the touch panel 223 into four regions, each of which includes a triangle, and allocates a control function to each of the regions.

When the user selects one of the four regions, the remote controller 230 generates a control signal corresponding to the allocated control function and transmits the generated control signal to the display apparatus 101, and the image control unit 120 changes the channel or sound according to the control signal.
Of course, the user may set the general mode as a control item other than channel and sound adjustment.

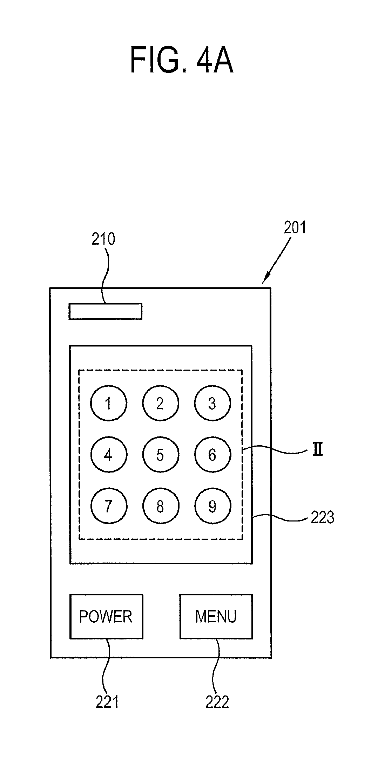

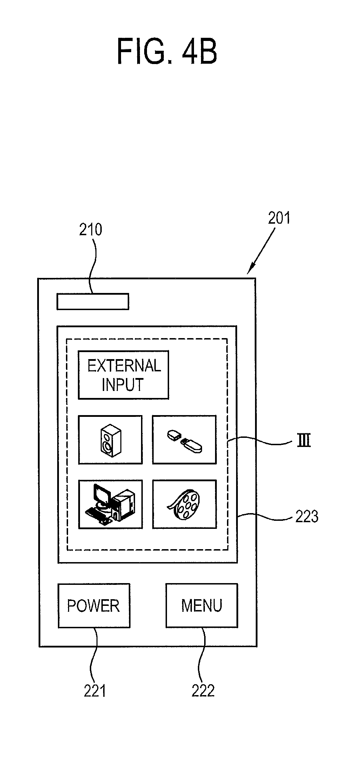

FIGs. 4A and 4B illustrate the remote controller 201 which displays a variety of control item information other than the general mode. FIG. 4A illustrates a graphical user interface (II) through which a user may input a channel number for channel selection, instead of increasing or decreasing the channel. Numbers of 1 to 9 are displayed in the touch panel 223 and a number selected by a user is transmitted, as a control signal, to the display apparatus 101. While the remote control unit 230 of FIG. 3 allocates the control function to the four regions, in this example, the remote control unit divides the touch panel 223 into nine regions and allocates numbers of 1 to 9 to the nine regions, respectively.

FIG. 4B illustrates a graphical user interface (III) for an external input mode of the display mode, which can control external inputs. "External input" as a control item and icons of various external devices, which may be selected as an external input, are displayed on the touch panel 223. A user may intuitively select one of these external devices using the icons. By employing the touch panel 223 as a user selection unit, the control item information may include a variety of images, thereby allowing the user to receive a variety of graphical user interfaces for remote control. The user may control the display apparatus 101 with more convenience and ease. If one of the icons is selected by the user, a subsequent interface for sub menus will appear on the touch panel 223.

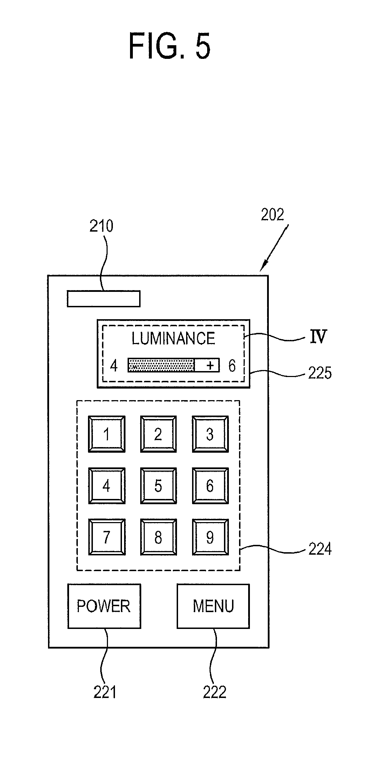

FIG. 5 is a schematic view illustrating a remote controller according to a third embodiment of the present invention. As shown in FIG. 5, a remote controller 202 includes a plurality of buttons 224, instead of a touch panel, and a display unit 225 for displaying control functions. The display unit 225 may be implemented by a liquid crystal display panel, an organic light-emitting device display, electronic paper, or the like.

Although it is shown in the figure that the plurality of button 224 has nine numbers, the plurality of buttons 224 may perform a variety of functions according to control item information in addition to input of numbers. The image control unit 120 transmits information on a button to be activated to control a control item to the remote control unit 230 which in turn displays the information on the display unit 225.

A control function (IV) for control of luminance is displayed on the display unit 225. As shown in the figure, a user may increase (+) or decrease (-) the luminance. For example, if a button No. 4 is selected, the luminance is decreased, or if a button No. 6 is selected, the luminance is increased. In this case, since other buttons except the buttons Nos. 4 and 6 for control of the luminance are disabled, no control signal is generated even if other buttons are selected by the user. If a luminance control mode is switched to a different display mode, a function allocated to the buttons will be also changed.

According to this embodiment, since the functions of buttons may be changed in various ways according to the control item information received from the display apparatus 101, the number of physical buttons to be included in the remoter controller 202 can be further reduced as compared to conventional remote controllers. That is, the remote controller 202 may not include individual buttons for performing many functions. Accordingly, the size of the remote controller 202 can be reduced and a user can use the remote controller 202 with more ease and convenience.

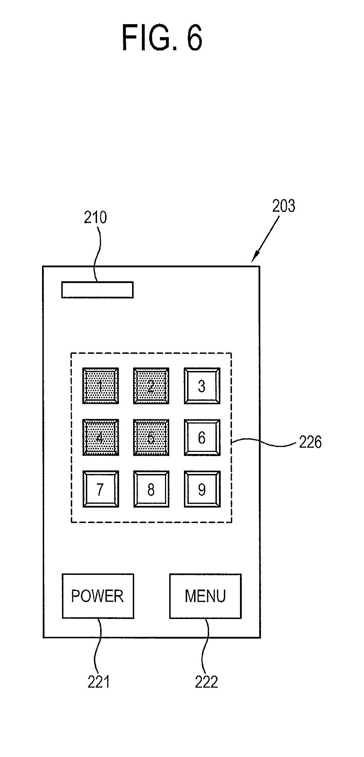

FIG. 6 is a schematic view illustrating a remote controller according to a fourth embodiment of the present invention.

A remote controller 203 according to this embodiment additionally includes a luminous function to allow a user to identify and select buttons 226 allocated with control functions with ease. Shaded button Nos. 1, 2, 4 and 5 correspond to activated buttons allocated with the control functions. Other buttons not allocated with the control functions are disabled as in the third embodiment. The buttons 226 may each include a light emitting element to be turned on or off depending on whether or not a control function is allocated to each button.

While the remote controller 203 may further include a display unit as shown in FIG. 5, a graphic interface indicating control functions may be displayed on the display apparatus rather than the remote controller 203. That is, the display apparatus 101 transmits only key code information on the control functions to the remote controller 203 and the control functions are displayed on the display apparatus so that a user can operate the remote controller while seeing the display apparatus 101.

The present invention allows a remote controller, which receives information on control items from a display apparatus, to use a limited user selection unit in various ways based on the information. Since bidirectional RF communication can be conducted between the display apparatus and the remote controller, signal transmission can be more freely achieved, thereby simplifying a physical configuration of a remote control unit.

As described above, according to an aspect of the present invention, there are provided a remote controller which can be operated by a user with convenience and ease, a display system employing the remote controller, and a control method thereof.

Another aspect of the present invention, there are provided a display apparatus and a remote controller which can exchange a variety of control signals therebetween using bidirectional communication, a display system including the display apparatus and the remote controller, and a control method thereof.

Still another aspect of the present invention, there are provided a remote controller which has the reduced number of buttons and can transmit a variety of control signals, a display system employing the remote controller, and a control method thereof.

Still another aspect of the present invention, there are provided a display apparatus and a remote controller which provide a variety of graphical user interfaces for remote control, a display system including the display apparatus and the remote controller, and a control method thereof.

Although a few exemplary embodiments of the present invention have been shown and described, it will be appreciated by those skilled in the art that changes may be made in these embodiments without departing from the principles of the invention, the scope of which is defined in the appended claims.

## Claims

1. A remote controller for controlling an external display apparatus, comprising:
a communication unit that receives control item information for controlling control items of the external display apparatus, from the external display apparatus;
a user selection unit that receives input from a user; and
a controller unit that allocates a control function for controlling one of the control items to the user selection unit based on the control item information and outputs a control signal corresponding to the control function selected by the user, to the external display apparatus.

2. The remote controller according to claim 1, wherein the communication unit conducts RF communication with the external display apparatus.

3. The remote controller according to claim 1 or 2, wherein the control item information comprises a key code for controlling the one of the control items and the control signal is generated based on the key code.

4. The remote controller according to any one of the preceding claims, wherein the user selection unit comprises a touch panel, and the controller unit displays an image indicating the control function on the touch panel.

5. The remote controller according to any one of claims 1 to 3, wherein the user selection unit comprises a plurality of buttons and the control function is one of a plurality of control functions, the remote controller further comprising a display unit which displays the plurality of control functions corresponding to the plurality of buttons.

6. The remote controller according to any one of the preceding claims, wherein the control function is one of a plurality of control functions and the user selection unit comprises a plurality of buttons, and the plurality of buttons comprises light-emitting elements that emit lights if the plurality of control functions is allocated to the plurality of buttons.

7. The remote controller according to any one of the preceding claims, wherein, upon receiving the control item information corresponding to a mode from the external display apparatus, the controller unit allocates the control function to change a channel of a broadcasting signal and another control function for adjusting a sound of the external display apparatus, to the user selection unit.

8. A display apparatus controllable by an external remote controller, comprising:
a communication unit that communicates with the remote controller; and
a controller unit that generates control item information on a control function for controlling a control item, transmits the generated control item information to the external remote controller, and controls the control item according to a control signal corresponding to the control function received from the external remote controller.

9. The display apparatus according to claim 8, wherein the control item information comprises a key code for controlling the control item.

10. The display apparatus according to claim 8 or 9, wherein the controller unit transmits user interface (UI) information for controlling the control item, to the external remote controller.

11. The display apparatus according to any one of claims 8 to 10, further comprising a broadcasting receiving unit that receives a broadcasting signal and a power supply that turns on or off power supplied to the broadcasting receiving unit, wherein, if the power supply turns on the power, the controller unit transmits control item information for a mode for changing a channel of the broadcasting signal and sound of the display apparatus, to the external remote controller.

12. The display apparatus according to any one of claims 8 to 11, wherein, if an external device is connected to the display apparatus, the controller unit generates control item information for controlling the external device, transmits the generated control item information for controlling the external device to the external remote controller, and controls the external device according to a control signal generated based on the control item information for controlling the external device, received from the external remote controller.

13. A method of controlling a display system including a display apparatus and a remote controller having a user selection unit, the method comprising:
generating control item information for controlling a control item, and transmitting the generated control item information to the remote controller;
allocating a control function for controlling the control item to the user selection unit based on the control item information;
outputting a control signal corresponding to the control function selected by a user, to the display apparatus; and
controlling the control item according to the control signal.

14. The method according to claim 13, wherein the display apparatus conducts RF communication with the remote controller.

15. The method according to claim 13 or 14, wherein the control item information comprises a key code for controlling the control item and the control signal is generated based on the key code.
